# EUROPEAN PATENT SPECIFICATION

(11) **EP 0 339 091 B1**
(45) Date of publication and mention of the grant of the patent: **27.11.1996**
(21) Application number: 88900122.8
(22) Date of filing: 21.12.1987
(51) Int. Cl.: G06T 11/00

(54) **APPARATUS FOR FORMING IMAGE**
GERÄT ZUR BILDFORMUNG
DISPOSITIF DE FORMATION D'IMAGES

(30) Priority: 22.12.1986 JP 305771/86
(43) Date of publication of application: 02.11.1989
(73) Proprietor: YOKOGAWA MEDICAL SYSTEMS, LTD, Hino-shi, Tokyo 191 (JP)
(72) Inventor: WATANABE, Yoshihiko Yokogawa Medical Systems, Ltd., Tokyo 190 (JP); FUJITA, Kenjiro Yokogawa Medical Systems, Ltd., Tokyo 190 (JP); TAKIURA, Yasuro Yokogawa Medical Systems, Ltd., Tokyo 190 (JP)
(74) Representative: Henkel, Feiler, Hänzel & Partner
(86) International application number: JP8701000
(87) International publication number: WO8804812

(56) References cited:
- EP-A- 0 120 335
- JP-A- 5 755 466
- PATENT ABSTRACTS OF JAPAN, vol. 6, no. 129 (P-128)[1007], 15th July 1982; & JP-A-57 55 466 (MATSUSHITA) 02-04-1982
- IEEE PROCEEDINGS PRIP'82, PATTERN RECOGNITION & IMAGE PROCESSING, Las Vegas, 14th - 17th June 1982, pages 491-496; J.C. BOCQUET et al.: "An Expert system" for reconstruction of mechanical object from projections"

## Description

### TECHNICAL FIELD

This invention relates to the improvements in image forming apparatus applied to computer tomography and NMR imaging. More particularly, this invention relates to the image forming apparatus in which the time from when data acquisition is started until the first image is obtained is reduced in case of conducting acquisition of image forming data and image formation in parallel by pipe-line system.

### BACKGROUND ART

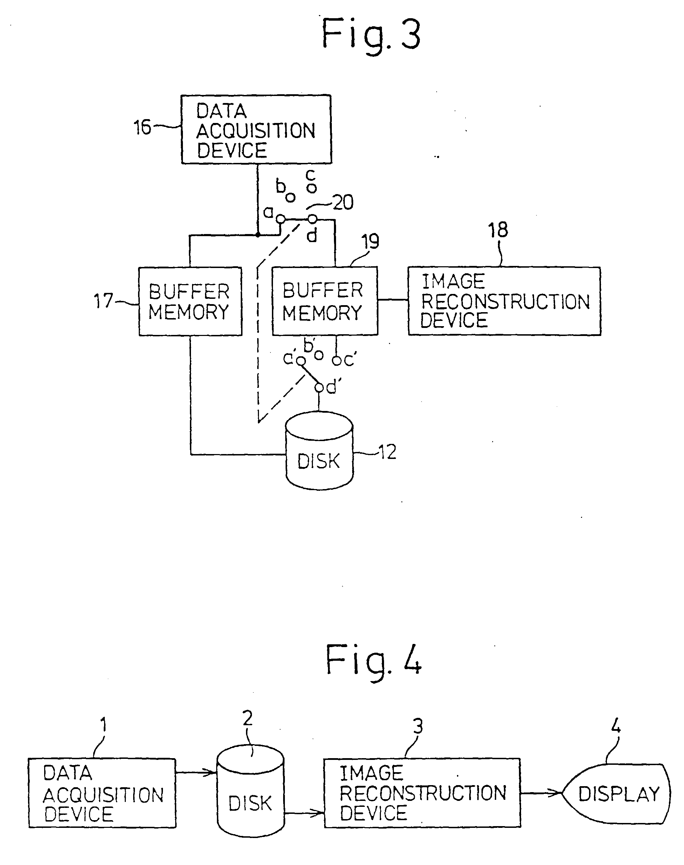

In computer tomography and NMR imaging, first data for image formation on a detected body is acquired by scan using X-ray or nuclear magnetic resonance, and subsequently an image is reconstructed by a designated algorithm using these data. In case of continuously scanning the detected body plural times to acquire a plurality of scan data and reconstructing an image one by one according to the respective scan data, data acquisition and image reconstruction are conducted in parallel by a pipe-line system to achieve speeding up of the operation. At that time, as shown in Figure 4, a large-capacity buffer memory 2 (intermediate buffer) comprising a magnetic disc device or the like is interposed between a data acquisition device 1 and an image reconstruction device 3 to absort a difference in speed between the data acquisition operation and the image reconstruction operation. The reconstruction image is displayed on a display device 4. In the thus constructed apparatus, reconstruction of an image can not be started by the image reconstruction device until data for one scan at least is collected in the intermediate buffer, so that the time spent until the first reconstructed image is made longer for that. On the contrary, according to a so called "Scan & Recon" system, image reconstruction is started simultaneously with the start of scan, so that the time spent until the first reconstruction image is obtained is made shorter. In this system, however, the next scan can not be started before image reconstruction is completed. Accordingly, this system is not suitable for use in continuously scanning plural times at high speed.

Prior art document PATENT ABSTRACTS OF JAPAN, vol. 6, No. 129 (P-128)[1007], 15th July 1982 & JP-A-57 55 466, discloses a storage device wherein a data segmented and stored into a plurality of sectors at a magnetic disc device is read out from a rotating recording medium, and one data is transmitted to a main storage section as the data through a data readout control circuit directly. Another data is inputted to a shift register circuit having greater storage capacity than one storage block of a split sector. The output data through this shift register circuit and the direct readout data are switched at a gate circuit and transferred to the main storage section. If the sector to be read out passes through a head location, the data of passing sector stored in the shift register can be read out directly.

Further, prior art document EP-A-0 120 335 discloses an apparatus for displaying ultrasound signal information in polar coordinates. In this apparatus echo signals are supplied alternately to two complete image memories having a two-dimensionally arrange memory matrix. These image memories are operated as changing temporary memories so that a complete ultrasound scan can be displayed.

### DISCLOSURE OF INVENTION

It is an object of the present invention to provide an image forming apparatus which is an image forming apparatus adopting a pipe-line system having an intermediate buffer between a data acquisition device and an image reconstruction device, in which image reconstruction can be started simultaneously with the start of scan.

To solve this object the present invention provides an image forming apparatus as specified in claim 1.

The image forming apparatus of the present invention is characterized in that there is provided a path for supplying data from a data acquisition device directly to an image reconstruction device to send the first scan data also to the image reconstruction device simultaneously with sending data to an intermediate buffer, so that image reconstruction according to the scan data can be immediately started.

### BRIEF DESCRIPTION OF DRAWINGS

Figure 1 is a conceptual block diagram of one embodiment of the present invention;
Figures 2 and 3 are conceptual block diagrams of the other embodiments of the present invention; and
Figure 4 is a conceptual block diagram of the conventional image forming apparatus.

### BEST MODE FOR CARRYING OUT THE INVENTION

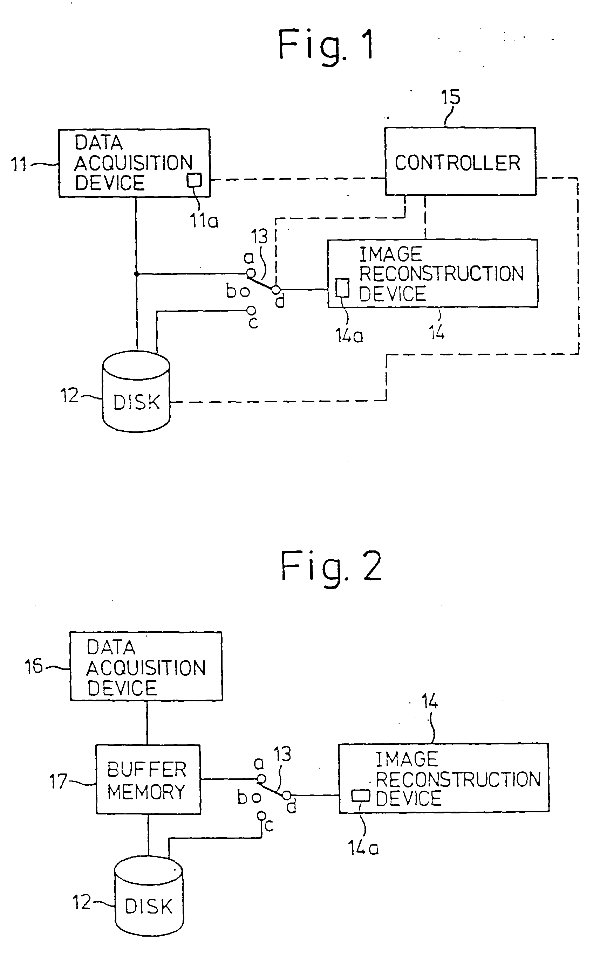

Figure 1 shows the conceptual constitution of one embodiment of the present invention. In Figure 1, a data acquisition device 11 is generally provided in computed tomography and NMR imaging apparatus and adapted to acquire scan data by continuously scanning a detected body plural times using X-ray or nuclear magnetic resonance. The device incorporates a buffer memory 11a having a capacity enough to store data for one scan. The scan data in the buffer memory 11a is transferred to a large-capacity intermediate buffer 12 formed by a magnetic disc or the like to be stored. The data transfer rate of the intermediate buffer 12 is far higher than the data acquisition rate of the data acquisition device 11. A change-over switch 13 is provided to supply the scan data transferred from the data acquisition device 11 to the intermediate buffer 12 or scan data stored in the intermediate buffer 12 to the image reconstruction device 14. The change-over switch 13 has three switching positions (a), (b), (c), whereby when the switch is placed at the position (a), the scan data transferred from the data acquisition device 11 to the intermediate buffer 12 can be supplied to the image reconstruction device 14, and when it is placed at the position (c), the scan data stored in the intermediate buffer 12 can be supplied to the image reconstruction device 14. The position (b) is the neutral position which is in the state of cutting off the supply of scan data. The image reconstruction device 14 is generally provided in computed tomography and NMR imaging apparatus , for example, and implemented by a special-purpose computer operated by a designated alogorithm. The image reconstruction device 14 incorporates a buffer memory 14a having a capacity enough to store data for one scan. The scan data supplied through the change-over switch 15 is stored in the buffer memory 14a and provided for image reconstruction. The speed of reconstructing one sheet of image by the image reconstruction device 14 is slower than the speed of acquiring data for one scan by the data acquisition device 11. The operation of the data acquisition device 11, the intermediate buffer 12, the change-over switch 13 and the image reconstruction device 14 is controlled by a control device 15. A transmission path for a control signal is shown by a broken line. The control device 15 is implemented by a computer or the like.

The thus constructed image forming apparatus operates as follows. Tbe data acquisition device 11 is adapted to acquire scan data by continuously scanning a detected body plural times and transfer the scan data to the intermediate buffer 12 through the buffer memory 11a. At this time, the first scan data is supplied also to the image reconstruction device 14 through the change-over switch 13 put in the state of being placed at the position (a) to be written in the buffer memory 14a. The image reconstruction device 14. starts image reconstruction simultaneously with writing data in the buffer memory 14a. Thus, the first sheet of image is reconstructed simultaneously with sending the first scan data to the intermediate buffer, so that the time from when scan is started until the first image is obtained can be reduced to that in case of conventional "Scan & Recon" system. The change-over switch 13 is switched to the position (b) after the first scan data is supplied to the buffer memory 14a of the image reconstruction device 14 to separate the image reconstruction device 14 from the data acquisition device 11. As the operating speed of the image reconstruction device 14 is slower than that of the data acquisition device 11, at a point of this time, the image reconstruction device 14 is in the process of reconstructing the first sheet of image using the first scan data written in the buffer memory 14a. During this time, the scan data acquired successively by the data acquisition device 11 is transferred to the intermediate buffer 12 to be stored. The change-over switch 13 is switched to the position (c) every time the image reconstruction device 14 reconstructs one sheet of image, whereby the data for the next one scan is transferred from the intermediate buffer 12 to the image reconstruction device 14 to be provided for the next image reconstruction. Thus, acquisition of scan data and image reconstruction are carried out by pipe-line system.

Though the above embodiment deals with the case in which both the data acquisition device 11 and the image reconstruction device 14 respectively incorporate a buffer memory for one scan, if the data acquisition device does not incorporate a buffer memory, as shown in Figure 2, a buffer memory 17 is interposed between the data acquisition device 16 and the intermediate buffer 12. If neither the data acquisition device nor the image reconstruction device incorporates a buffer memory, as shown in Figure 3, the second buffer memory 19 is further provided to be used as a buffer device for data transferred between an image reconstruction device 18 and the data acquisition device 16 or the intermediate buffer 12. In that case, a change-over switch 20 comprising two interlocking devices is provided in an input circuit on the data acquisition device side of the buffer memory 19 and in an input circuit on the intermediate buffer side thereof, respectively, thereby alternatively switching input data of the buffer memory 19. Further, it goes without saying that a control device similar to that in the case of Figure 1, not shown, exists in apparatus of Figures 2 and 3.

## Claims

1. An image forming apparatus comprising:
- data acquisition means (11, 16) for acquiring scan data by scanning a detected body;
- a first buffer memory (11a, 17) having a storage capacity enough to store scan data for at least one scan, in which scan data acquired by said data acquisition means (11, 16) is stored;
- a second buffer memory (14a, 19) having a storage capacity enough to store scan data for at least one scan;
- image reconstruction means (14, 18) for carrying out image reconstruction; and
- select means (13, 20);
characterized in that
- said data acquisition means (11, 16) acquires the scan data by continuously scanning the detected body plural times;
- all the scan data acquired by said data acquisition means (11, 16) and transferred through said first buffer memory (11a, 17) is stored in an intermediate buffer (12) which is a large-capacity buffer memory;
- said image reconstruction means (14, 18) carries out image reconstruction according to scan data stored in said second buffer memory (14a, 19); and
- said select means (13, 20) is adapted to select said first buffer memory (11a, 17) as a source of scan data to be transferred to said second buffer memory (14a, 19) when said data acquisition means (11, 16) acquires the first scan data and to select said intermediate buffer (12) after that.

2. The image forming apparatus as claimed in claim 1, wherein said first buffer memory (11a) is incorporated in said data acquisition means (11).

3. The image forming apparatus as claimed in claim 1, wherein said second buffer memory (14a) is incorporated in said image reconstruction means (14).

## Patentansprüche

1. Bildformungsgerät mit:
- einer Datengewinnungseinrichtung (11, 16) zum Gewinnen von Abtastdaten durch Abtasten eines erfaßten Körpers,
- einem ersten Pufferspeicher (11a, 17) mit einer Speicherkapazität, die ausreichend ist, um Abtastdaten für wenigstens eine Abtastung zu speichern, in welchem durch die Datengewinnungseinrichtung (11, 16) gewonnene Abtastdaten gespeichert sind,
- einem zweiten Pufferspeicher (14a, 19) mit einer Speicherkapazität, die ausreichend ist, um Abtastdaten für wenigstens eine Abtastung zu speichern,
- einer Bildrekonstruktionseinrichtung (14, 18) zum Ausführen einer Bildrekonstruktion, und
- einer Wähleinrichtung (13, 20),
dadurch gekennzeichnet, daß
- die Datengewinnungseinrichtung (11, 16) die Abtastdaten durch mehrmaliges kontinuierliches Abtasten des erfaßten Körpers gewinnt,
- alle durch die Datengewinnungseinrichtung (11, 16) gewonnenen und über den ersten Pufferspeicher (11a, 17) übertragenen Abtastdaten in einem Zwischenpuffer (12), der ein Pufferspeicher großer Kapazität ist, gespeichert werden,
- die Bildrekonstruktionseinrichtung (14, 18) eine Bildrekonstruktion gemäß Abtastdaten ausführt, die in dem zweiten Pufferspeicher (14a, 19) gespeichert sind, und
- die Wähleinrichtung (13, 20) gestaltet ist, um den ersten Pufferspeicher (11a, 17) als eine Quelle von zu dem zweiten Pufferspeicher (14a, 19) zu übertragenden Abtastdaten zu wählen, wenn die Datengewinnungseinrichtung (11, 16) die ersten Abtastdaten gewinnt, und um den Zwischenpuffer (12) danach zu wählen.

2. Bildformungsgerät nach Anspruch 1, bei dem der erste Pufferspeicher (11a) in der Datengewinnungseinrichtung (11) enthalten ist.

3. Bildformungsgerät nach Anspruch 1, bei dem der zweite Pufferspeicher (14a) in der Bildrekonstruktionseinrichtung (14) enthalten ist.

## Revendications

1. Appareil de formation d'images comprenant :
- un moyen d'acquisition de données (11, 16) pour acquérir des données de balayage en balayant un corps détecté ;
- une première mémoire tampon (11a, 17) ayant une capacité de stockage suffisante pour stocker des données de balayage pour au moins un balayage, dans lequel des données de balayage acquises par ledit moyen d'acquisition de données (11, 16) sont stockées ;
- une seconde mémoire tampon (14a, 19) ayant une capacité de stockage suffisante pour stocker des données de balayage pour au moins un balayage ;
- un moyen de reconstruction d'image (14, 18) pour réaliser une reconstruction d'image ; et
- un moyen de sélection (13, 20) ;
caractérisé en ce que
- ledit moyen d'acquisition de données (11, 16) acquiert les données de balayage en balayant continuellement le corps détecté plusieurs fois ;
- toutes les données de balayage acquises par ledit moyen d'acquisition de données (11, 16) et transférées via ladite première mémoire tampon (11a, 17) sont stockées dans une mémoire tampon intermédiaire (12) qui est une mémoire tampon de grande capacité ;
- ledit moyen de reconstruction d'image (14, 18) réalise une reconstruction d'image selon des données de balayage stockées dans ladite seconde mémoire tampon (14a, 19) ; et
- ledit moyen de sélection (13, 20) est adapté pour sélectionner ladite première mémoire tampon (11a, 17) comme source de données de balayage à transférer à ladite seconde mémoire tampon (14a, 19) lorsque ledit moyen d'acquisition de données (11, 16) acquiert les premières données de balayage et pour sélectionner ladite mémoire tampon intermédiaire (12) après cela.

2. Appareil de formation d'images selon la revendication 1, dans lequel ladite première mémoire tampon (11a) est incorporée dans ledit moyen d'acquisition de données (11).

3. Appareil de formation d'images selon la revendication 1, dans lequel ladite seconde mémoire tampon (14a) est incorporée dans ledit moyen de reconstruction d'image (14).
